# EUROPÄISCHE PATENTSCHRIFT

(11) **EP 0 709 269 B1**
(45) Veröffentlichungstag und Bekanntmachung des Hinweises auf die Patenterteilung: **19.01.2000**
(21) Anmeldenummer: 95116446.6
(22) Anmeldetag: 19.10.1995
(51) Int. Cl.: B61D 25/00, B60J 10/02

(54) **Schwimmende Fensterhalterung für Fahrzeuge, insbesondere für Nahverkehrsschienenfahrzeuge**
Floating support of a window for vehicles, especially for railway vehicles used for regional traffic
Support flottant d'une fenêtre pour véhicules, notamment pour véhicules ferroviaires de trafic régional

(30) Priorität: 26.10.1994 DE 4438266; 26.05.1995 DE 19519415
(43) Veröffentlichungstag der Anmeldung: 01.05.1996
(73) Patentinhaber: DWA Deutsche Waggonbau GmbH, 12526 Berlin (DE); HÜBNER Gummi- und Kunststoff GmbH, D-34123 Kassel (DE)
(72) Erfinder: Haring, Lothar, D-06188 Niemberg (DE); Mosaner, Olaf, D-34130 Kassel (DE)

(56) Entgegenhaltungen:
- DE-C- 899 152
- GB-A- 2 093 106
- US-A- 2 356 878
- US-A- 2 532 130

## Beschreibung

Die Erfindung betrifft eine schwimmende Halterung von Fenstern in den Fensterausschnitten von Fahrzeugen, wobei das Fenster aus einer einfachen Fensterscheibe oder mindestens aus einer Doppelscheibe besteht und die Halterung durch ein im Fensterausschnitt umlaufendes, elastisches Fensterprofil gebildet wird, und sie läßt sich insbesondere vorteilhaft an Nahverkehrs-Schienenfahrzeugen realisieren.

Im Schienenfahrzeugbau ist es allgemein bekannt, daß beim Einbau von nicht beweglichen Fenstern in die Fensterausschnitte des Wagenkastens grundsätzlich zwischen einer festen Fensterhalterung und einer sogenannten schwimmenden Fensterhalterung unterschieden wird. Der Unterschied zwischen diesen beiden Befestigungsarten besteht dabei darin, daß bei der festen Fensterhalterung das mit einem Rahmen versehene Fenster im Fensterausschnitt am Seitenwandgerippe des Fahrzeuges zumeist verschraubt oder verklebt wird, währenddessen bei der schwimmenden Fensterhalterung das Fenster ohne Rahmen ausgebildet ist und lediglich durch speziell geformte Fensterprofile im Fensterausschnitt gehalten wird. Während sich die feste Fensterhalterung somit aufgrund der Möglichkeit, den bei Tunnelfahrten oder bei Zugbegegnungen auftretenden hohen Lastwechseln an den Fenstern sicher standzuhalten, besonders für Hochgeschwindigkeitszüge od. dgl. eignet, hat sich die schwimmende Fensterhalterung aufgrund ihrer Vorzüge beim Ein- und Ausbau der Fenster sowie ihrer Stabilität gegen Zug-, Druck- und Pufferstoßkräfte für Reisezugwagen und Nahverkehrs-Schienenfahrzeuge am vorteilhaftesten erwiesen. Aus der Vielzahl bekannter Lösungen zu schwimmenden Fensterhalterungen sind dabei solche Lösungen am gebräuchlichsten, bei denen das elastische Fensterprofil, ähnlich wie bei den in der DD-PS 101 622 und in dem DE-GM 8 116 661 offenbarten Lösungen, einerseits durch einen senkrechten Haltesteg oder eine schräge Druckkante sowie durch eine die Außenbeblechung einseitig umgreifende Lippe im Fensterausschnitt gehalten wird und andererseits das Fenster in einer U-förmigen Haltenut umfaßt. Darüber hinaus sind an der Innenseite und/oder an der Außenseite des Fensterprofils keilförmige oder runde Füller vorgesehen, die den erforderlichen Anpreßdruck des Fensterprofils auf die Halterungen im Fensterausschnitt und auf das Fenster erzeugen.
Bei einer weiteren, durch das DE-GM 7 005 883 bekannten Lösung weist das ebenfalls einerseits durch einen senkrechten Haltesteg im Fensterausschnitt gehaltene und andererseits das Fenster in einer U-förmigen Haltenut umfassende, elastische Fensterprofil darüber hinaus an der Innenseite eine Dichtlippe zwischen Innenscheibe und Fensterschlüssel auf gegen deren Hals sich der Fensterschlüssel im Bereich des gefaßten Scheibenrandes abstützt. Der auch hier zur Anwendung kommende keilförmige Füller wird dabei von der Außenseite des Fensterprofils her im Bereich zwischen dem Rand des Fensters und dem Haltesteg eingesetzt.

Der Nachteil solcher bekannten schwimmenden Fensterhalterungen ist jedoch, daß die Kraftaufnahme gegen betriebsbedingte Zug- und Druckkräfte auf das Fenster immer unmittelbar innerhalb der U-förmigen Haltenut im Fensterprofil vorgesehen ist, so daß die seitlichen Lippen der U-förmigen Haltenut relativ stark beziehungsweise voluminös dimensioniert werden müssen. Dies hat wiederum zur Folge, daß zwar das Fensterprofil noch annähernd bündig zur Außenbeblechung des Fahrzeuges im Fensterausschnitt befestigt werden kann, das Fenster selbst jedoch immer nur entgegen den heutigen Gestaltungsrichtlinien von modernen Nahverkehrs-Schienenfahrzeugen zur Außenbeblechung etwas zurückgesetzt im Fensterausschnitt gehalten wird. Das GB-A-2 083 106 weist ein Fenster mit einer schwimenden Fensterhalterung, mit den Merkmalen des Oberbegriffes des Anspruchs 1.
Die Erfindung verfolgt somit das Ziel, eine schwimmende Fensterhalterung an Reisezugwagen derart auszubilden, daß die genannten Mängel des Standes der Technik beseitigt werden.

Als Aufgabe liegt der Erfindung die Konzipierung einer schwimmende Fensterhalterung an Reisezugwagen, insbesondere an Nahverkehrs-Schienenfahrzeugen, zugrunde, mit welcher sowohl das elastische Fensterprofil als auch das Fenster selbst bündig zur Außenbeblechung des Fahrzeuges im Fensterausschnitt arretierbar sind.
Die Aufgabe wird mit einer gattungsgemäßen schwimmenden Fensterhalterung nach dem Oberbegriff des Anspruchs 1 durch die Merkmale des Kennzeichens des Anspruchs 1 gelöst. Zweckmäßige Ausgestaltungen des Gegenstandes der Erfindung sind in den Unteransprüchen 2 bis 9 angegeben.
Der Vorteil der erfindungsgemäßen schwimmenden Fensterhalterung gegenüber dem Stand der Technik ist, daß durch die zusätzliche Klemmnut innerhalb der U-förmigen Haltenut des Fensterprofils die Kraftaufnahme gegen betriebsbedingte Druckkräfte auf das Fenster innerhalb des Fensterprofils und nicht durch die Seitenlippen der U-förmigen Haltenut erfolgen kann. Dadurch ist es möglich, das Fenster, entsprechend heutiger Gestaltungsrichtlinien für moderne Nahverkehrs-Schienenfahrzeuge, bündig zur Außenbeblechung im Fensterprofil zu arretieren und die Außenseite des Fensterprofils, da diese keinerlei Haltefunktionen mehr hat, entsprechend eben und mit dünnen Randlippen auszubilden sowie ebenfalls annähernd bündig zur Außenbeblechung des Fahrzeuges im Fensterausschnitt anzuordnen.
Ein Ausführungsbeispiel der Ertindung ist in den dazugehörigen Zeichnungen schematisch dargestellt und wird nachfolgend ausführlich erläutert.Die Zeichnungen zeigen dabei in
- Fig. 1 -: die erfindungsgemäße Fensterhalterung für eine Doppelscheibe im Schnitt
- Fig. 2 -: eine Variante der erfindungsgemäßen Fensterhalterung für eine Doppelscheibe im Schnitt
- Fig. 3 -: eine weitere Variante der erfindungsgemäßen Fensterhalterung für eine Doppelscheibe im Schnitt
- Fig. 4 -: die erfindungsgemäße Fensterhalterung für eine einfache Fensterscheibe im Schnitt
- Fig. 5 -: eine Variante der erfindungsgemäßen Fensterhalterung für eine einfache Fensterscheibe im Schnitt
- Fig. 6 -: eine weitere Variante der erfindungsgemäßen Fensterhalterung für eine einfache Fensterscheibe im Schnitt

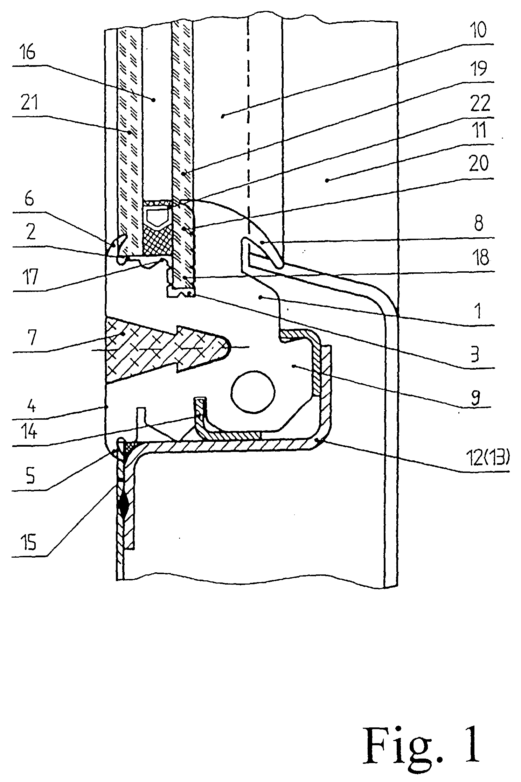

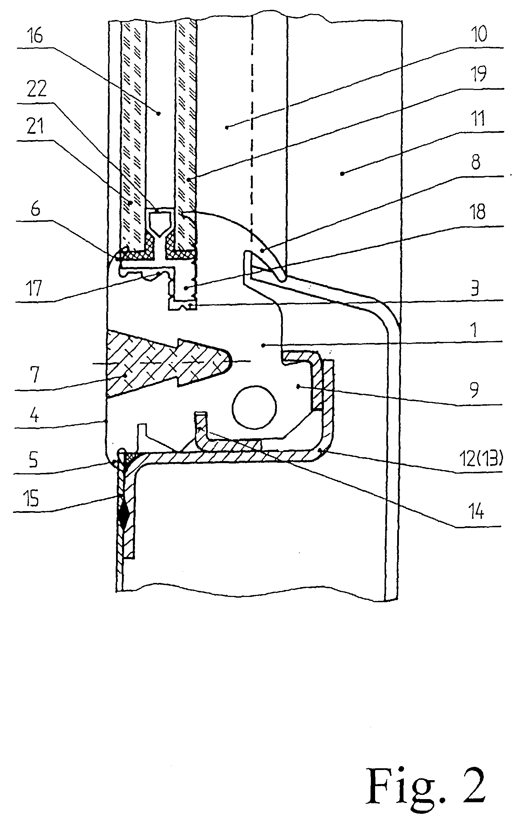

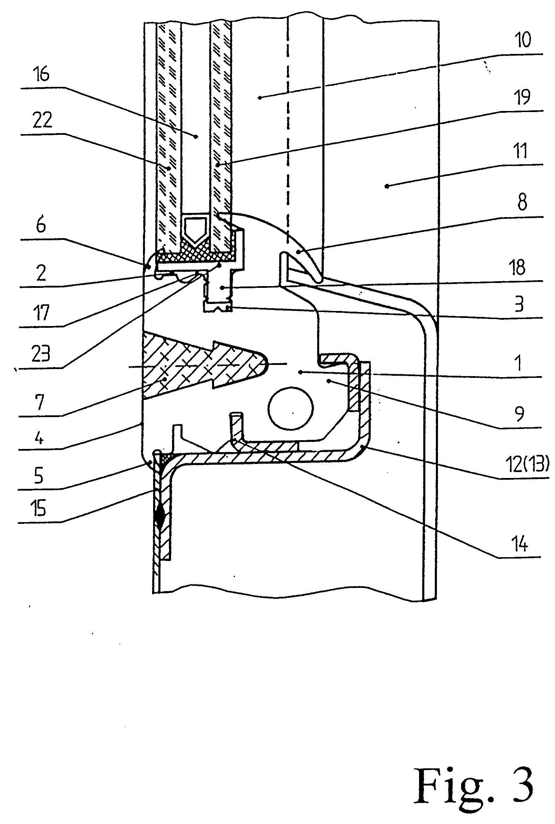

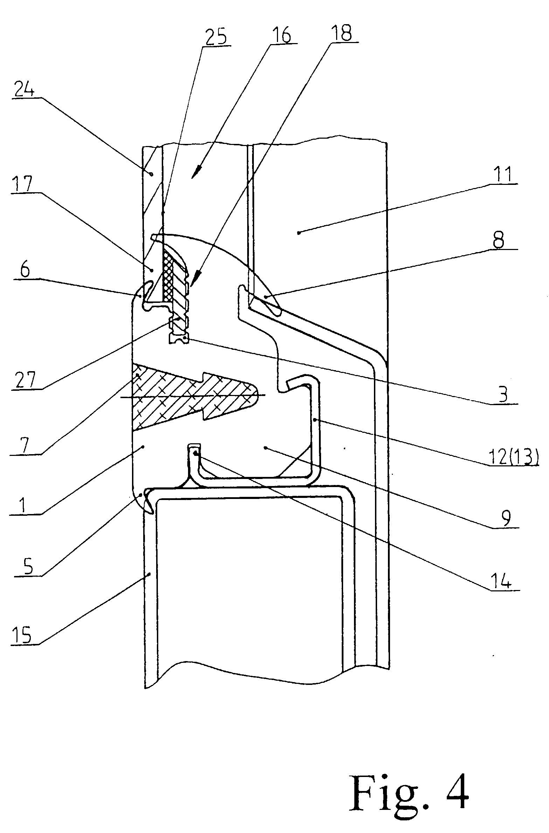

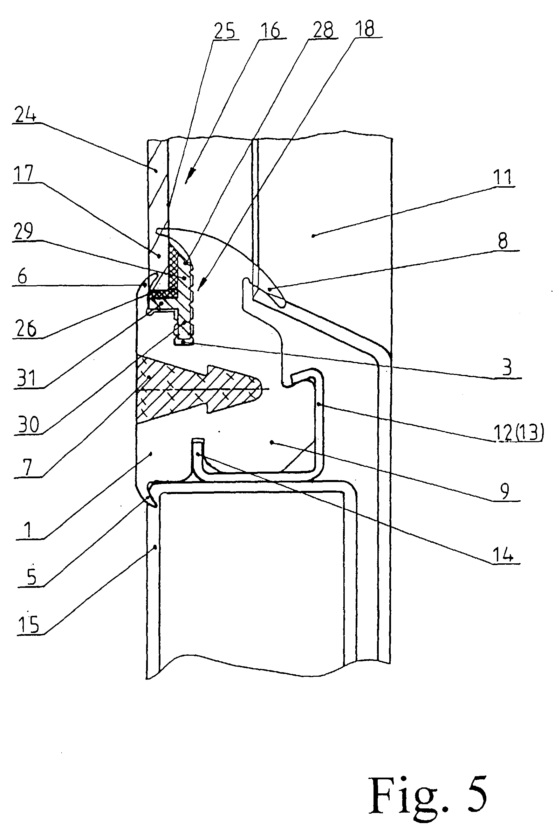

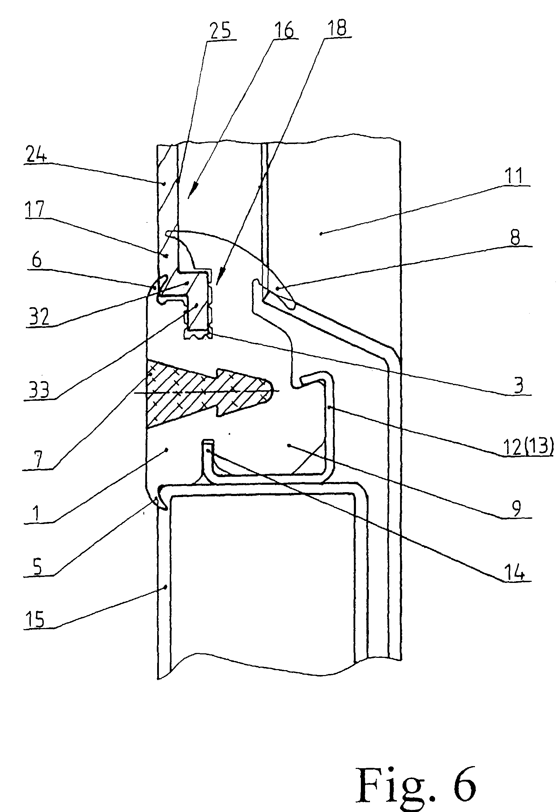

In den Fig. 1 bis 3 ist deutlich zu sehen, daß das zu befestigende Fenster 16 aus zwei miteinander verbundenen Fensterscheiben besteht, während in den Fig. 3 bis 6 das Fenster 16 aus einer einfachen Fensterscheibe 24 gebildet wird. Die Halterung des Fensters 16 wird dabei durch ein umlaufendes elastisches Fensterprofil 1 gebildet, welches an der Innenseite eine bekannte Dichtlippe 8 zwischen Innenscheibe 19 und Fensterschlüssel 11 sowie an der Außenseite 4 einen bekannten keilförmigen Füller 7 aufweist und in an sich bekannter Weise einerseits durch einen senkrechten Haltesteg 14 im Fensterausschnitt 10 gehalten wird sowie andererseits das Fenster 16 in einer U-förmigen Haltenut 2 umfaßt.
Um nunmehr den heutigen Richtlinien bei der Gestaltung moderner Nahverkehrs-Schienenfahrzeuge gerecht zu werden, weist das Fensterprofil 1 erfindungsgemäß eine ebene, zur Außenbeblechung 15 des Fahrzeuges annähernd bündige Außenseite 4 auf, deren Randpartien lediglich als Abdecklippen 5; 6 zur Außenscheibe 21 und zur Außenbeblechung 15 ausgebildet und mit keinerlei Haltefunktionen bedacht sind. Die fensterseitige Abdecklippe 6 ist dabei, wie in den Fig. 1 bis 3 zu sehen ist, zugleich als äußere Seitenlippe der U-förmigen Haltenut 2 vorgesehen und relativ dünn ausgebildet, um das Fenster 16 in der Haltenut 2 bündig zur Außenbeblechung 15 des Fahrzeuges anordnen zu können. Innerhalb dieser Haltenut 2 ist darüber hinaus eine weitere, zum Haltesteg 14 im Fensterausschnitt 10 weisende, umlaufende Klemmnut 3 angeordnet, in welcher das an seinem umlaufenden Scheibenrand 17 mit einem stegartigen Kragen 18 ausgebildete Fenster 16 im Fensterausschnitt 10 arretiert wird und durch welche zugleich auftretende betriebsbedingte Druckkräfte auf das Fenster 16 im Fensterprofil 1 aufgenommen werden. Bei Verwendung eines Fensters 16 mit Doppelscheibe ist der stegartige Kragen 18 am Scheibenrand 17 des Fensters 16 dabei, wie aus Fig. 1 ersichtlich ist, bevorzugt als verlängerte Randpartie 20 der Innenscheibe 19 ausgebildet, indem die Innenscheibe 19 größer als die Außenscheibe 21 ausgebildet und derart mit dieser verbunden, vorzugsweise verklebt, ist, daß der umlaufende Scheibenrand 17 des Fensters 16 eine Abstufung aufweist. Diese Abstufung kann durch eine formgleiche Ausbildung sowie zentrische Verbindung von Innenscheibe 19 und Außenscheibe 21 in vorteilhafter Weise mit umlaufend gleicher Höhe oder durch formungleiche Ausbildung und/oder exzentrische Verbindung von Innen- und Außenscheibe 19; 21, bei entsprechender Tiefe der Klemmnut 3, auch mit unterschiedlicher Höhe, beispielsweise am oberen und unteren Rand des Fensters 16 höher als an den Seitenrändern, ausgebildet werden.
Darüber hinaus hat es sich bei dieser Ausführungsform der erfindungsgemäßen Fensterhalterung als vorteilhaft erwiesen, den Scheibenrand 17 des Fensters 16 zusätzlich durch ein in der Zeichnung nicht dargestelltes Abschlußprofil zumindest teilweise zu ummanteln, um die Festigkeit der Verbindung zwischen Innenscheibe 19 und Außenscheibe 21 zu erhöhen beziehungsweise die im Lastfall auftretenden Scherkräfte auf die mit der Klemmnut 3 des Fensterprofils 1 in Wirkverbindung stehende, verlängerte Randpartie 20 der Innenscheibe 19 zu minimieren. Dieses Abschlußprofil kann dabei als Teil des umlaufenden Abstandhalterprofils 22 zwischen Innen- und Außenscheibe 19;21 ausgebildet sein, welches den gesammten Scheibenrand 17 des Fensters 16, einen Teil davon oder nur die verlängerte Randpartie 20 der Innenscheibe 19 umschließt oder auch als gesondertes Randprofil ausgebildet werden, welches in gleicher Weise den Scheibenrand 17 umschließend an diesem verklebt ist.
Als alternative Ausführungsform der erfindungsgemäßen Fensterhalterung bei Verwendung eines Fensters 16 mit Doppelscheibe ist es auch möglich, den stegartigen Kragen 18 am Scheibenrand 17 des Fensters 16, wie in Fig. 2 abgebildet, als über diesen Scheibenrand 17 hinausragende Verlängerung des umlaufenden Abstandhalterprofils 22 zwischen Innen- und Außenscheibe 19; 21 auszubilden, welche mit der Klemmnut 3 des Fensterprofils 1 in Wirkverbindung steht. Der Scheibenrand 17 des Fensters 16 ist dabei durch die Verwendung von gleichgroßen Innen- und Außenscheiben 19;21 in bekannter Weise ohne Abstufung ausgebildet und das Abstandhalterprofil 22 weist dabei bevorzugt zwei weitere, von einem senkrecht aus dem Scheibenrand 17 des Fensters 16 herausragenden Verlängerungssteg aus rechtwinklige, nicht näher bezeichnete Schenkel auf, mit denen es den Scheibenrand 17 des Fensters 16 umschließt und an diesem zusätzlich verklebt ist. Wie aus Fig. 2 ersichtlich ist, ist der von diesen beiden Schenkeln mit der Innenscheibe 19 verbundene Schenkel darüber hinaus mit dem vom Scheibenrand 17 des Fensters 16 wegweisenden und mit der Klemmnut 3 des Fensterprofils 1 in Wirkverbindung stehenden Kragen 18 ausgebildet, welcher bevorzugt direkt in Verlängerung der Innenscheibe 19 an diesem Schenkel angeordnet ist. Bei Bedarf ist jedoch auch dessen Anordnung direkt gegenüber dem Verlängerungssteg des Abstandhalterprofils 22 möglich oder an einer Stelle zwischen den genannten Vorzugsvarianten.
In weiterer alternativer Ausführung der erfindungsgemäßen Fensterhalterung bei Verwendung eines Fensters 16 mit Doppelscheibe ist es jedoch auch möglich, den stegartigen Kragen 18 am Scheibenrand 17 des Fensters 16, wie in Fig. 3 abgebildet, als den von diesem Scheibenrand 17 wegweisenden Steg eines zusätzlichen umlaufenden Profilelementes 23 mit T-förmigen Profilquerschnitt auszubilden, welches einerseits über seinem Schenkel mit dem Scheibenrand 17 des Fensters 16 verbunden ist und andererseits durch seinen Steg mit der Klemmnut 3 des Fensterprofils 1 in Wirkverbindung steht. Der Scheibenrand 17 des Fensters 16 und das Abstandhalterprofil 23 zwischen der Innenscheibe 20 und der Außenscheibe 22 sind hierbei ebenfalls in bekannter Weise ohne Abstufung sowie ohne zusätzliche Schenkel od. dgl. ausgebildet. Hinsichtlich einer besseren Festigkeit der Verbindung zwischen dem Scheibenrand 17 des Fensters 16 und dem T-förmigen Profilelement 23 ist es dabei von Vorteil, den Schenkel des Profilelementes 23, wie in der in Fig. 3 gezeigten Ausführungsform, zusätzlich derart rechtwinklig abzuwinkeln, daß dieser sowohl den Scheibenrand 17 des Fensters 16 als auch geringfügig die innere Randpartie der Innenscheibe 19 umschließt und an diesen verklebt werden kann. Der von dem Steg des Profilelementes 23 gebildete stegartige Kragen 18 ist auch bei dieser Ausführungsform bevorzugt in Verlängerung der Innenscheibe 19 angeordnet, kann aber auch hier gegenüber dem Abstandhalterprofil 22 oder an einer Stelle zwischen den genannten Vorzugsvarianten angeordnet werden.
Aus den Fig. 3 bis 6 ist darüber hinaus erkennbar, daß der stegartige Kragen 18 am Scheibenrand 17 des Fensters 16 bei Verwendung eines Fensters 16 mit einfacher Fensterscheibe 24 als nach der Scheibeninnenseite 25 hin versetzt angeordnete umlaufende Verlängerung des Scheibenrandes 17 ausgebildet ist, mit deren Versatz die Bündigkeit des Fensters 16 mit der Außenbeblechung 15 des Fahrzeuges bestimmbar ist. Ebenso wie bei doppelscheibigen Fenstern ist es somit auch bei der Verwendung einscheibiger Fenster möglich, die für die Bündigkeit des Fensters 16 mit der Außenbeblechung 15 entscheidenden Einflußfaktoren durch Variierung des Versatzmaßes der Verlängerung des Scheibenrandes 17, verbunden mit entsprechenden Lageänderungen der Klemmnut 3 im Fensterprofil 1, zu beeinflussen.
Als bevorzugte Realisierungsform der Verlängerung des Scheibenrandes 17 hat sich ein mit der Scheibeninnenseite 25 verbundenes Stegblech 27 der in Fig. 4 abgebildeten Art erwiesen, welches einerseits mit der Fensterscheibe 24 bevorzugt verklebt ist und andererseits mit der Klemmnut 3 des Fensterprofils 1 in Wirkverbindung steht. Das in Fig. 4 gezeigte, im Profilquerschnitt gerade Stegblech 27 kann jedoch auch mit einem Z-förmigen oder mit einem anderen ähnlichen Profilquerschnitt ausgebildet werden, wenn sich dies als erforderlich erweist, beziehungsweise auch aus einem nichtmetallischen Werkstoff bestehen.
Eine alternative Ausführungsform der Verlängerung des Scheibenrandes 17 bei Verwendung eines Fensters 16 mit einfacher Fensterscheibe 24, die zwar etwas kostenaufwendiger ist, sich jedoch durch eine höhere Festigkeit auszeichnet, ist in Fig. 5 dargestellt. Bei dieser Ausführung ist die Verlängerung des Scheibenrandes 17 als ein mit einer Schenkelhälfte 29 und mit dem Steg 31 sowohl an der Scheibeninnenseite 25 als auch an der Scheibenstirnseite 26 bevorzugt verklebtes T-förmiges Profil 28 ausgebildet, dessen andere Schenkel hälfte 30 mit der Klemmnut 3 des Fensterprofils 1 in Wirkverbindung steht. Durch die Verbindung der einen Schenkelhälfte 29 und des Steges 31 des Profils 28 mit der Fensterscheibe 24 ist bei dieser Ausführung eine erhöhte Festigkeit der Verbindung zwischen dem Profil 28 und der Fensterscheibe 24 erreichbar, wobei auch hier metallische oder nichtmetallische Profile zum Einsatz kommen können. Als Modifikation zu dem in Fig. 5 abgebildeten T-förmigen Profil 28 ist es auch möglich, die mit der Klemmnut 3 des Fensterprofils 1 in Wirkverbindung stehende in gerader Verlängerung zu der mit dem Fenster 16 verklebten Schenkelhälfte 29 angeordnete Schenkelhälfte 30 des Profils 28, beispielsweise durch eine Kröpfung in Steghöhe, in Richtung Fahrzeuginneres zu der einen Schenkelhälfte 29 versetzt auszubilden, so daß der gesamte Schenkel des Profils 28 Z-förmig ausgebildet ist und die Stabilität der Fensterhalterung weiter erhöht wird.
Mit der in Fig. 6 abgebildeten Fensterhalterung wird darüber hinaus noch eine weitere Variante zur Ausbildung der Verlängerung des Scheibenrandes 17 dargestellt, mit der die gleichen Vorteile wie mit den vorgenannten Ausführungsformen erzielbar sind. Dabei ist deutlich erkennbar, daß die Verlängerung des Scheibenrandes 17 bei dieser Ausführungsform als randseitige Kröpfung 32 der Fensterscheibe 24 selbst ausgebildet ist, deren zur Fensterscheibe 24 paralleler Teil 33 mit der Klemmnut 3 des Fensterprofils 1 in Wirkverbindung steht. Ein zusätzlicher Vorteil gegenüber den anderen Ausführungsformen ist bei dieser Variante, daß gesonderte Profile für die Verlängerung des Scheibenrandes 17 eingespart und die damit notwendigen Klebeverbindungen vermieden werden.
Als Ausgestaltung der erfindungsgemäßen Fensterhalterung weist das Fensterprofil 1 darüber hinaus bevorzugt unterhalb der Dichtlippe 8 zwischen Innenscheibe 19 und Fensterschlüssel 11 noch eine zusätzliche Sicherungslippe 9 auf, welche sich gegen die in Fig. 1 bis 6 angedeuteten Begrenzungselemente des Fensterausschnittes 10, wie Seitenwandsäulen 12 und Querspanten 13 des Seitenwandgerippes, abstützt. Diese Sicherungslippe 9 ist als Verdrehsicherung des Fensterprofils 1 bei extremen Druckkräften auf das Fenster 16 ausgebildet und bewirkt dadurch, daß das Fensterprofil 1 sich bei Druckkraft auf die Innenseite des Fensters 16 nicht mehr von seiner Halterung auf dem Haltesteg 14 im Fensterausschnitt 10 lösen kann eine optimale Sicherheit und Vandalismusresisdenz.
Erwähnt werden soll noch, daß der in den Fig. 1 bis 3 ohne Bezugszeichen dargestellte kreisförmige Hohlraum innerhalb des Fensterprofils 1 lediglich die Funktion hat, das Gewicht des Fensterprofils 1 geringfügig zu mindern und dessen Elastizität und Handhabbarkeit beim Fenstereinbau zu verbessern.

## Patentansprüche

1. Fenster mit einer schwimmenden Fensterhalterung für Ein- oder Mehrscheibenverglasung für Fahrzeuge, insbesondere Nahverkehrs-Schienenfahrzeuge, wobei die Fensterhalterung durch ein umlaufendes elastisches Fensterprofil (1) gebildet wird, welches einerseits durch einen senkrechten Haltesteg (14) im Fensterausschnitt (10) gehalten wird und andererseits das Fenster (16) in einer U-förmigen Haltenut (2) umfaßt sowie eine ebene, zur Außenbeblechung (15) des Fahrzeuges annähernd bündige Außenseite (4) aufweist, deren Randpartien als Abdecklippen (5;6) ausgebildet sind, wobei die fensterseitige Abdecklippe (6) zugleich als äußere Seitenlippe der U-förmigen Haltenut (2) vorgesehen ist, dadurch **gekennzeichnet**, daß das Fensterprofil (1) an der Innenseite eine Dichtlippe (8) zwischen Scheibeninnenseite (25) und Fensterschlüssel (11) sowie an der Außenseite einen keilförmigen Füller (7) aufweist, der im Bereich zwischen dem Scheibenrand (17) des Fensters (16) und dem Haltesteg (14) angeordnet ist, und daß innerhalb der Haltenut (2) eine weitere, zum Haltesteg (14) im Fensterausschnitt (10) weisende, umlaufende Klemmnut (3) angeordnet ist, in welcher das an seinem umlaufenden Scheibenrand (17) mit einem stegartigen Kragen (18) ausgebildete Fenster (16) ebenfalls bündig mit der AuAußenbeblechung (15) des Fahrzeuges im Fensterausschnitt (10) arretierbar ist und durch welche zugleich auftretende betriebsbedingte Druckkräfte auf das Fenster (16) im Fensterprofil (1) aufnehmbar sind.

2. Schwimmende Fensterhalterung nach Anspruch 1, dadurch **gekennzeichnet**, daß der stegartige Kragen (18) am Scheibenrand (17) des Fensters (16) bei Verwendung eines Fensters (16) mit Doppelscheibe bevorzugt als verlängerte Randpartie (20) der Innenscheibe (19) ausgebildet ist, indem die Innenscheibe (19) größer als die Außenscheibe (21) ausgebildet ist, wobei die verlängerte Randpartie (20) der Innenscheibe (19) mit der Klemmnut (3) des Fensterprofils (1) in Wirkverbindung steht.

3. Schwimmende Fensterhalterung nach Anspruch 1, dadurch **gekennzeichnet**, daß der stegartige Kragen (18) am Scheibenrand (17) des Fensters (16) bei Verwendung eines Fensters (16) mit Doppelscheibe als über diesen Scheibenrand (17) hinausragende Verlängerung des umlaufenden Abstandhalterprofils (22) zwischen Innen- und Außenscheibe (19;21) ausgebildet ist, welche mit der Klemmnut (3) des Fensterprofils (1) in Wirkverbindung steht.

4. Schwimmende Fensterhalterung nach Anspruch 1, dadurch **gekennzeichnet**, daß der stegartige Kragen (18) am Scheibenrand (17) des Fensters (16) bei Verwendung eines Fensters (16) mit Doppelscheibe als der von diesem Scheibenrand (17) wegweisende Steg eines zusätzlichen umlaufenden Profilelementes (23) mit T-förmigen Profilquerschnitt ausgebildet ist, welches einerseits über seinen Schenkel mit dem Scheibenrand (17) des Fensters (16) verbunden ist und andererseits durch seinen Steg mit der Klemmnut (3) des Fensterprofils (1) in Wirkverbindung steht.

5. Schwimmende Fensterhalterung nach Anspruch 1, dadurch **gekennzeichnet**, daß der stegartige Kragen (18) am Scheibenrand (17) des Fensters (16) bei Verwendung eines Fensters (16) mit einfacher Fensterscheibe (24) als nach der Scheibeninnenseite (25) hin versetzt angeordnete umlaufende Verlängerung des Scheibenrandes (17) ausgebildet ist, mit deren Versatz die Bündigkeit des Fensters (16) mit der Außenbeblechung (15) des Fahrzeuges bestimmbar ist.

6. Schwimmende Fensterhalterung nach Anspruch 1 und 5, dadurch **gekennzeichnet**, daß bei Verwendung eines Fensters (16) mit einfacher Fensterscheibe (24) die Verlängerung des Scheibenrandes (17) als ein mit der Scheibeninnenseite (25) verbundenes Stegblech (27) ausgebildet ist, welches einerseits mit der Fensterscheibe (24) bevorzugt verklebt ist und andererseits mit der Klemmnut (3) des Fensterprofils (1) in Wirkverbindung steht.

7. Schwimmende Fensterhalterung nach Anspruch 1 und 5, dadurch **gekennzeichnet**, daß bei Verwendung eines Fensters (16) mit einfacher Fensterscheibe (24) die Verlängerung des Scheibenrandes (17) als ein mit einer Schenkelhälfte (29) und mit dem Steg (31) sowohl an der Scheibeninnenseite (25) als auch an der Scheibenstirnseite (26) bevorzugt verklebtes T-förmiges Profil (28) ausgebildet ist, dessen andere Schenkelhälfte (30) mit der Klemmnut (3) des Fensterprofils (1) in Wirkverbindung steht.

8. Schwimmende Fensterhalterung nach Anspruch 1 und 5, dadurch **gekennzeichnet**, daß bei Verwendung eines Fensters (16) mit einfacher Fensterscheibe (24) die Verlängerung des Scheibenrandes (17) bevorzugt als randseitige Kröpfung (32) der Fensterscheibe (24) selbst ausgebildet ist, deren zur Fensterscheibe (24) paralleler Teil (33) mit der Klemmnut (3) des Fensterprofils (1) in Wirkverbindung steht.

9. Schwimmende Fensterhalterung nach Anspruch 1 bis 8, dadurch **gekennzeichnet**, daß das Fensterprofil (1) bevorzugt unterhalb der Dichtlippe (8) zum Fensterschlüssel (11) eine zusätzliche Sicherungslippe (9) aufweist, welche als Verdrehsicherung des Fensterprofils (1) bei extremen Druckkräften auf das Fenster (16) ausgebildet ist und mit den Begrenzungselementen des Fensterausschnittes (10), beispielsweise Seitenwandsäulen (12) und Querspanten (13) des Seitenwandgerippes, in Wirkverbindung steht.

## Claims

1. Window having a floating window mounting for single-pane or multiple-pane glazing for vehicles, in particular suburban rail vehicles, the window mounting being formed by a peripheral, elastic window profile (1) which, on the one hand, is retained in the window cutout (10) by a perpendicular retaining web (14) and, on the other hand, grasps the window (16) in a U-shaped retaining groove (2) and also has a flat outside (4), which is approximately flush with the exterior cladding (15) of the vehicle and whose edge portions are designed as covering lips (5; 6), the covering lip (6) on the window side being provided at the same time as an exterior side lip of the U-shaped retaining groove (2), characterized in that on the inside, the window profile (1) has a sealing lip (8) between the inside (25) of the window pane and the window key (11) and also, on the outside, has a wedge-shaped filler (7) which is arranged in the region between the window-pane edge (17) of the window (16) and the retaining web (14), and in that within the retaining groove (2) there is arranged a further, peripheral clamping groove (3) which points towards the retaining web (14) in the window cutout (10) and in which the window (16), which is formed with a web-like collar (18) on its peripheral window-pane edge (17), can be locked in place in the window cutout (10) in a manner such that it is likewise flush with the exterior cladding (15) of the vehicle, and by means of which, at the same time, operationally caused compressive forces acting on the window (16) can be absorbed in the window profile (1).

2. Floating window mounting according to Claim 1, characterized in that when a window (16) is used with a double window pane, the web-like collar (18) on the window-pane edge (17) of the window (16) is preferably designed as an extended edge portion (20) of the inner window pane (19) by the inner window pane (19) being designed such that it is larger than the outer window pane (21), the extended edge portion (20) of the inner window pane (19) being operatively connected to the clamping groove (3) of the window profile (1).

3. Floating window mounting according to Claim 1, characterized in that when a window (16) is used with a double window pane, the web-like collar (18) on the window-pane edge (17) of the window (16) is designed as an extension, which protrudes over this window-pane edge (17), of the peripheral spacer profile (22) between the inner window pane and outer window pane (19; 21), which extension is operatively connected to the clamping groove (3) of the window profile (1).

4. Floating window mounting according to Claim 1, characterized in that when a window (16) is used with a double window pane, the web-like collar (18) on the window-pane edge (17) of the window (16) is designed as the web, which points away from this window-pane edge (17), of an additional, peripheral profile element (23) having a T-shaped profile cross section, which profile element, on the one hand, is connected via its leg to the window-pane edge (17) of the window (16) and, on the other hand, is operatively connected by its web to the clamping groove (3) of the window profile (1).

5. Floating window mounting according to Claim 1, characterized in that when a window (16) is used with a single window pane (24), the web-like collar (18) on the window-pane edge (17) of the window (16) is designed as a peripheral extension of the window-pane edge (17), which extension is arranged offset towards the inside (25) of the window pane and whose offset can be used to determine the flush-mounting of the window (16) with the exterior cladding (15) of the vehicle.

6. Floating window mounting according to Claim 1 and 5, characterized in that when a window (16) having a single window pane (24) is used, the extension of the window-pane edge (17) is designed as a web plate (27) which is connected to the inside (25) of the window pane, is, on the one hand, preferably bonded to the window pane (24) and, on the other hand, is operatively connected to the clamping groove (3) of the window profile (1).

7. Floating window mounting according to Claim 1 and 5, characterized in that when a window (16) having a single window pane (24) is used, the extension of the window-pane edge (17) is designed as a T-shaped profile (28) which is preferably bonded, both on the inside (25) of the window pane and also on the end side (26) of the window pane, to a leg half (29) and to the web (31) and whose other leg half (30) is operatively connected to the clamping groove (3) of the window profile (1).

8. Floating window mounting according to Claim 1 and 5, characterized in that when a window (16) having a single window pane (24) is used, the extension of the window-pane edge (17) is preferably designed as a right-angled bend (32) on the edge side of the window pane (24) itself, whose part (33) which is parallel to the window pane (24) is operatively connected to the clamping groove (3) of the window profile (1).

9. Floating window mounting according to Claims 1 to 8, characterized in that the window profile (1), preferably below the sealing lip (8) to the window key (11), has an additional securing lip (9) which is designed as a means of protecting the window profile (1) against becoming distorted in the event of extreme compressive forces on the window (16), and is operatively connected to the boundary elements of the window cutout (10), for example side wall pillars (12) and transverse ribs (13) of the side-wall frame.

## Revendications

1. Fenêtre avec un support de fenêtre flottant pour vitrage simple ou multiple pour véhicules, en particulier véhicules ferroviaires pour trafic régional, le support de fenêtre étant formé par un profil de fenêtre (1) périphérique élastique, lequel est maintenu d'une part par une nervure d'arrêt (14) verticale dans la découpe de fenêtre (10) et entoure d'autre part la fenêtre (16) dans une rainure d'arrêt (2) en forme de U et présente également une face extérieure (4) plane, approximativement à fleur avec la carrosserie extérieure (15) du véhicule, dont les parties périphériques sont formées comme lèvres de recouvrement (5; 6), la lèvre de recouvrement (6) du côté fenêtre étant en même temps prévue comme lèvre latérale extérieure de la rainure d'arrêt (2) en forme de U, caractérisée en ce que le profil de fenêtre (1) présente du côté intérieur une lèvre d'étanchéité (8) entre la face intérieure du vitrage (25) et la butée de fenêtre (11) ainsi qu'un noyau (7) en forme de coin du côté extérieur, lequel est disposé dans la zone entre le bord de la vitre (17) de la fenêtre (16) et la nervure d'arrêt (14), et en ce que, à l'intérieur de la rainure d'arrêt (2), une autre rainure de serrage (3) périphérique est disposée orientée vers la nervure d'arrêt (14) dans la découpe de fenêtre (10), dans laquelle la fenêtre (16) formée avec un rebord en forme de nervure (18) à son bord de vitre (17) périphérique peut être arrêtée dans la découpe de fenêtre (10), également à fleur avec la carrosserie extérieure (15) du véhicule, et au moyen de laquelle les forces de pression intervenant simultanément sur la fenêtre (16) du fait de l'utilisation peuvent être absorbées dans le profil de fenêtre (1).

2. Support de fenêtre flottant suivant la revendication 1, caractérisé en ce que, dans le cas de l'utilisation d'une fenêtre (16) avec double vitrage, le rebord en forme de nervure (18) au bord de vitre (17) de la fenêtre (16) est conçu de préférence comme partie périphérique (20) prolongée de la vitre intérieure (19), en ceci que la vitre intérieure (19) est conçue plus grande que la vitre extérieure (21), la partie périphérique (20) prolongée de la vitre intérieure (19) étant en relation de coopération avec la rainure de serrage (3) du profil de fenêtre (1).

3. Support de fenêtre flottant suivant la revendication 1, caractérisé en ce que, dans le cas de l'utilisation d'une fenêtre (16) avec double vitrage, le rebord en forme de nervure (18) au bord de vitre (17) de la fenêtre (16) est conçu comme prolongement dépassant de ce bord de vitre (17) du profil d'entretoise (22) périphérique entre les vitres intérieure et extérieure (19; 21), lequel est en relation de coopération avec la rainure de serrage (3) du profil de fenêtre (1).

4. Support de fenêtre flottant suivant la revendication 1, caractérisé en ce que, dans le cas de l'utilisation d'une fenêtre (16) avec double vitrage, le rebord en forme de nervure (18) au bord de vitre (17) de la fenêtre (16) est conçu comme nervure s'écartant de ce bord de vitre (17) d'un élément de profil périphérique supplémentaire (23) avec section de profil en forme de T, lequel est d'une part relié par sa jambe avec le bord de vitre (17) de la fenêtre (16) et d'autre part est par sa nervure en relation de coopération avec la rainure de serrage (3) du profil de fenêtre (1).

5. Support de fenêtre flottant suivant la revendication 1, caractérisé en ce que, dans le cas de l'utilisation d'une fenêtre (16) avec simple vitrage (24), le rebord en forme de nervure (18) au bord de vitre (17) de la fenêtre (16) est conçu comme prolongement périphérique du bord de vitre (17) disposé de manière décalée vers la face intérieure de la vitre (25), dont le décalage permet de définir l'affleurement de la fenêtre (16) avec la carrosserie extérieure (15) du véhicule.

6. Support de fenêtre flottant suivant la revendication 1 et 5, caractérisé en ce que, dans le cas de l'utilisation d'une fenêtre (16) avec simple vitrage (24), le prolongement du bord de vitre (17) est conçu comme une tôle de nervure (27) reliée à la face intérieure de la vitre (25), laquelle d'une part est de préférence collée au vitrage (24) et d'autre part est en relation de coopération avec la rainure de serrage (3) du profil de fenêtre (1).

7. Support de fenêtre flottant suivant la revendication 1 et 5, caractérisé en ce que, dans le cas de l'utilisation d'une fenêtre (16) avec simple vitrage (24), le prolongement du bord de vitre (17) est conçu comme un profil en forme de T (28) de préférence collé avec une moitié de jambe (29) et avec la nervure (31) tant sur la face intérieure de la vitre (25) que sur la face frontale (26) de la vitre, dont l'autre moitié de jambe (30) est en relation de coopération avec la rainure de serrage (3) du profil de fenêtre (1).

8. Support de fenêtre flottant suivant la revendication 1 et 5, caractérisé en ce que, dans le cas de l'utilisation d'une fenêtre (16) avec simple vitrage (24), le prolongement du bord de vitre (17) est conçu de préférence comme double coude périphérique (32) du vitrage (24) lui-même, dont la partie (33) parallèle au vitrage (24) est en relation de coopération avec la rainure de serrage (3) du profil de fenêtre (1).

9. Support de fenêtre flottant suivant la revendication 1 à 8, caractérisé en ce que le profil de fenêtre (1) présente de préférence en dessous de la lèvre d'étanchéité (8) vers la butée de fenêtre (11) une lèvre de fixation supplémentaire (9), laquelle est conçue comme sécurité contre la torsion du profil de fenêtre (1) en cas de forces extrêmes de pression sur la fenêtre (16) et est en relation de coopération avec les éléments de limitation de la découpe de fenêtre (10), par exemple des colonnes de paroi latérale (12) et des couples transversaux (13) de l'ossature de paroi latérale.
